Europäisches Patentamt

European Patent Office

Office européen des brevets

(19)

(11) Publication number: **0 405 629 A2**

# EUROPEAN PATENT APPLICATION

(12)

(21) Application number: 90201444.8

(22) Date of filing: 06.06.90

(51) Int. Cl.⁵: **G11B 23/023**, G11B 23/40, G11B 23/113

(30) Priority: 19.06.89 IT 4684789

(43) Date of publication of application:
02.01.91 Bulletin 91/01

(84) Designated Contracting States:
AT BE CH DE DK ES FR GB GR IT LI LU NL SE

(71) Applicant: SACMA PLAST S.r.l.
Via A. Volta, 3/B
I-42011 Bagnolo in Piano (R.E.)(IT)

(72) Inventor: Sacchini, Enzo
Via L. Ariosto, 14
I-42010 Borzano di Albinea (R.E)(IT)

(74) Representative: Corradini, Corrado et al
Studio Ing. C. CORRADINI & C. S.r.l. 4, Via
Dante Alighierieri
I-42100 Reggio Emilia(IT)

(54) Device for associating descriptive inserts with cases for video cassettes.

(57) A device for associating descriptive inserts with videocassette cases comprising two half-cases hinged together in the manner of a book and provided externally with a transparent sheet fixed to the opposing outer edges of said half-cases comprises:
- an intermittently moving horizontal conveyor (1) on which the cases (2) are placed open such that the their interior faces upwards, the hinge (21) between the half-cases (20) being perpendicular to the conveying direction,
- located transversely to the conveyor, a unit (7, 77) for gripping and positioning the cases, and arranged to raise said cases while keeping the sheet (23) distanced from the structure of the case, which is open through an angle exceeding 180°, and
- a horizontal table for inserting the descriptive inserts (3), which is aligned with the aperture defined between the sheet and the structure of the case supported by said unit (7, 77), and comprises two identical coplanar plates (10) driven with mutual approach and withdrawal movement, to occupy a spaced-apart position in which they are able to support a completely extended descriptive insert, and a position of approach in which they cause the descriptive insert to assume a curved configuration,
- said horizontal table being rigid with a slider arranged transversely to the conveyor axis, in order to occupy a retracted position for loading the extended descriptive insert, and an advanced position in which it places the curved descriptive insert between the sheet and structure of the case, means for gripping the descriptive insert being provided in front of said table on the other side of the conveyor. .

EP 0 405 629 A2

FIG.1

## DEVICE FOR ASSOCIATING DESCRIPTIVE INSERTS WITH CASES FOR VIDEO CASSETTES

Videocassettes, ie cartridges containing two spools of magnetic tape for use in video cameras and video players, are stored in substantially book-shaped cases consisting of two half-books hinged to a spine.

When these are opened in the manner of a book they expose a compartment in which the videocassette is located.

The outer surface of said case, defining the front cover, the spine and the rear cover of the book, is covered by a sheet of taut transparent plastic welded to those opposing edges of said front and bear covers parallel to the spine.

The cases are mass produced, and are personalized by inserting below the transparent plastic sheet a printed descriptive insert carrying the title of the videocassette contents and other information.

The object of the present invention is to automatically insert said descriptive insert, an operation which is currently done manually, with all the consequent limitations in terms of production and cost.

The present invention therefore provides a device for attaining the aforesaid object.

Said device comprises conveyor means driven with intermittent motion and arranged to receive and transfer the open book-shaped cases with their cavity for receiving the videocassette facing upwards, and their spine perpendicular to the conveyor axis.

The operating station for inserting the descriptive inserts is positioned along said conveyor, which connects together a stock of empty cases and a stock of cases containing the videocassette and with the descriptive insert already applied.

Said station comprises sucker means positioned respectively above and below the conveyor and arranged to raise the spine of the case upwards and to pull the transparent plastic sheet downwards.

By this means the case assumes the form of an open book forming a concave angle facing downwards, with the transparent sheet separated from the cover and forming a concave angle approximately equal to the preceding but facing upwards.

To the side of the conveyor the station comprises the means for inserting the descriptive insert, which consist of two coplanar plates of adjustable distance apart, driven with to-and-fro movement parallel to the spine of the book-shaped case.

When in their spaced-apart position said two plates receive the descriptive inserts, and then move towards each other to give the descriptive inserts a slight undulation, then they are inserted into the space formed between the case and the transparent sheet, after which they move apart again and when the descriptive insert has been secured in position they withdraw to undergo a new cycle.

The characteristics and merits of the invention will be apparent from the detailed description given hereinafter with reference to the accompanying figures, which illustrate a particular preferred embodiment thereof by way of non-limiting example.

Figure 1 is a schematic plan view of a device according to the invention for applying descriptive inserts to videocassettes.

Figures 2A and 2B represent a section on the line II-II of Figure 1 to an enlarged scale.

Figures 3A and 3B are a view of Figures 2A and 2B from above, to a reduced scale.

Figure 4 is a section on the line IV-IV of Figure 3A.

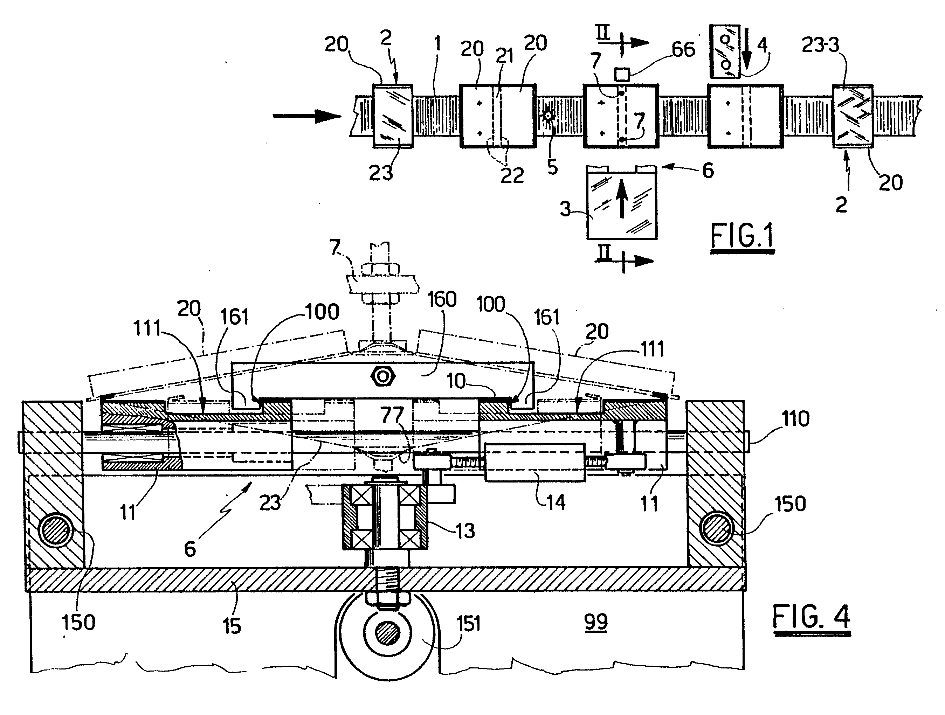

Said figures, and in particular Figure 1, show a conveying line 1 for the cases 2, it being shown schematically as it can take the form of any conveyor suitable for the purpose, such as a belt conveyor, slat conveyor or V-belt conveyor.

The conveyor 1 connects a store of empty cases (to the left in Figure 1) to a store of full cases (to the right in Figure 1), neither of which is shown for simplicity and clarity. To the side of said conveyor 1 there are located convenient devices, not shown because of known type, for feeding the descriptive inserts 3 to be associated with the cases 2, the videocassettes 4 to be placed in the cases, and seals (not shown) to be applied to the filled cases.

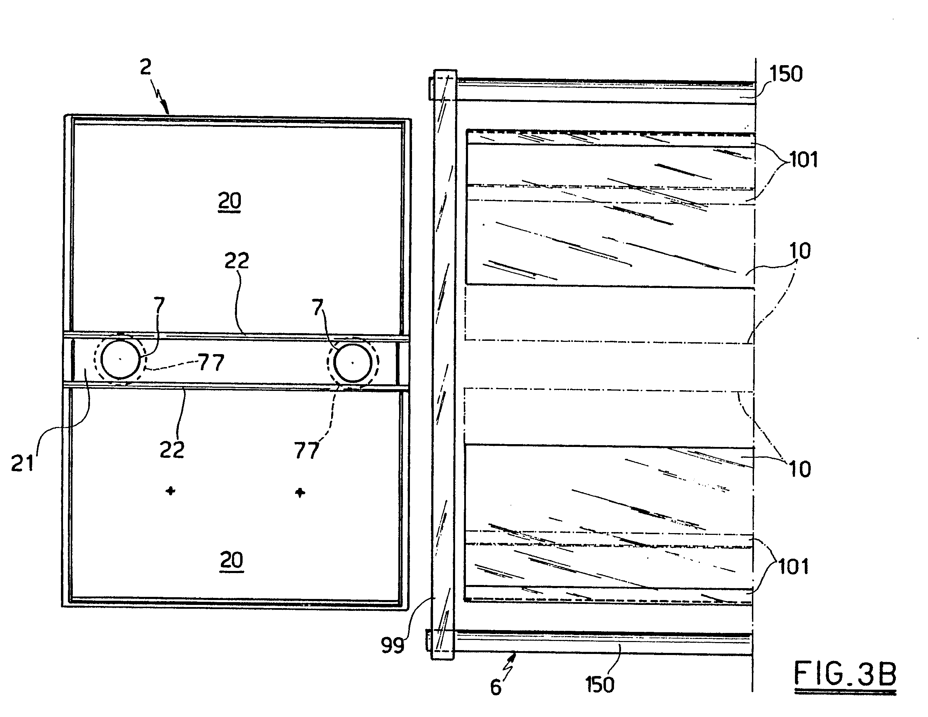

In the usual manner, the cases 2 consist of a hollow synthetic thin-walled structure comprising two half-cases 20 hinged together in the manner of a book by a central rib 21 (see also Figure 3B) with two creasing lines 22, defining the spine.

On the outer face of the case 2 there is provided a transparent plastic sheet 23 which is welded along the outer opposing edges of said two half-cases 20 (see Figure 4).

The conveyor can move with stepwise motion, or intermittently, for example under the control of a sensor 5 (Figure 1) such as a photoelectric cell, by which the arriving cases 2 are correctly positioned relative to the device for inserting the descriptive inserts 3.

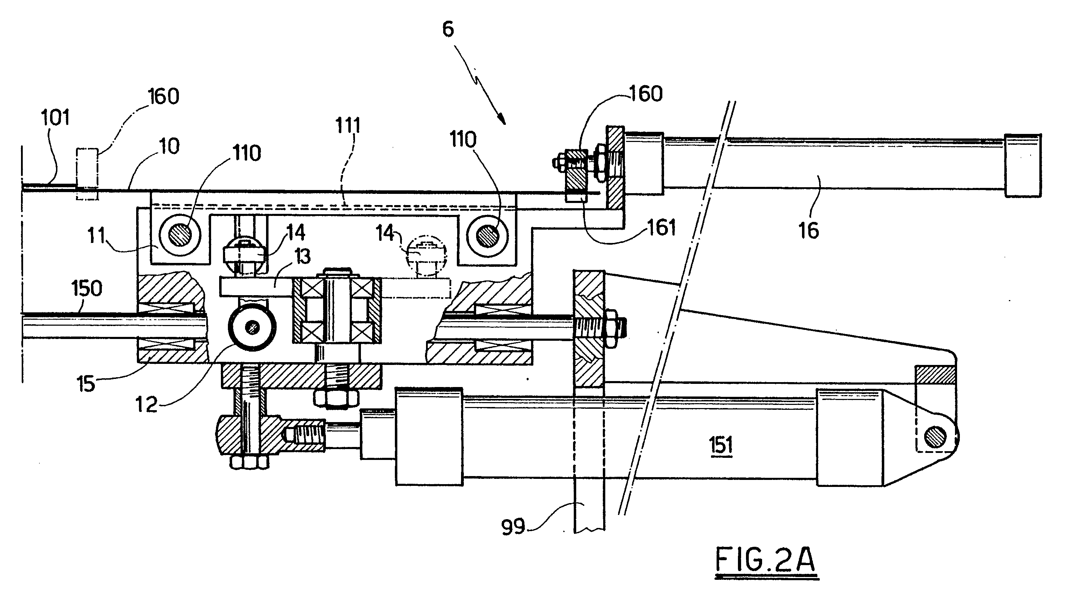

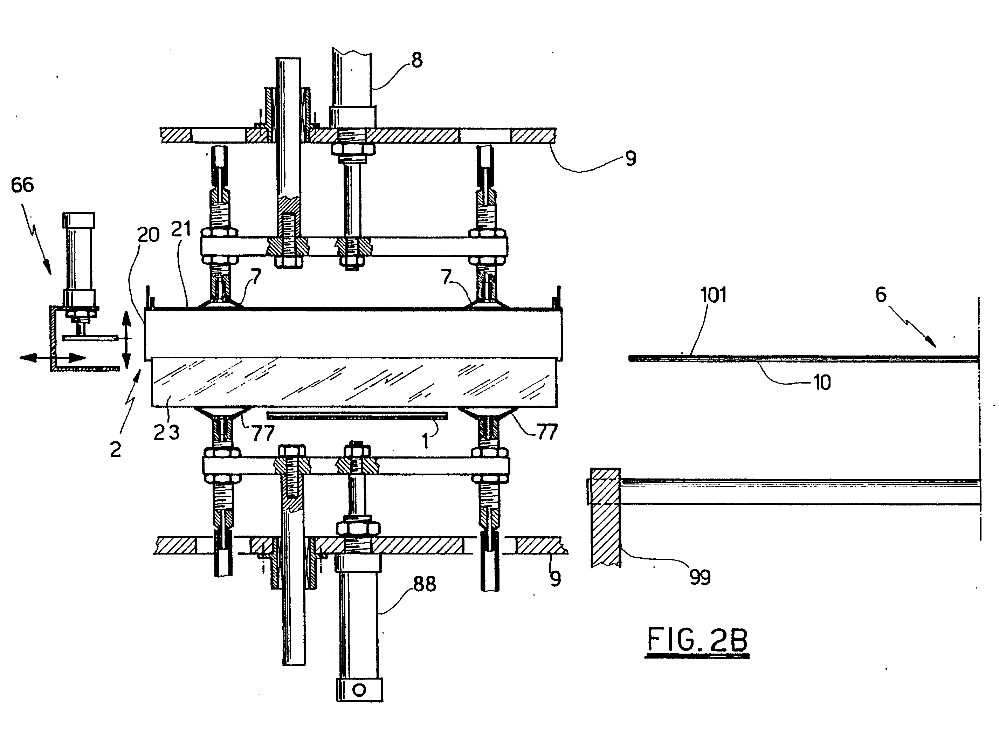

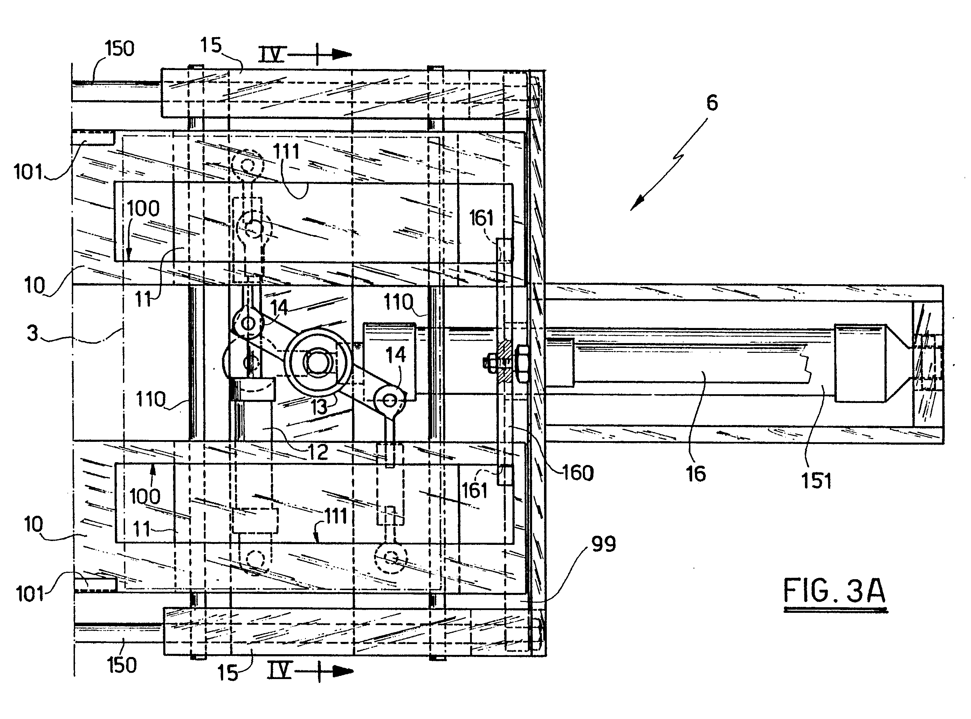

Before said insertion operation, the stages of which are described in detail hereinafter with reference to Figures 2A, 2B, 3A, 3B and .4, the cases are opened as shown in Figure 1, with their interior facing upwards, by a convenient device which is not shown as it is of usual type.

The open cases 2 have their rib 21 positioned transversely to the conveyor 1, this latter having a width less than the width of the rib (see Figures 1, 2B).

The device 6 for inserting the descriptive inserts 3 is positioned in the insertion station on one side of the conveyol 1 (see Figures 1, 2A), on the other side of which, facing this device, there is provided a gripper device 66 (see Figures 1, 2B).

With the device 6 there cooperate two sets of suckers 7 and 77, which are positioned respectively above and below the outward portion of the conveyor 1, to the sides thereof. As can be seen in Figures 2B and 4, in the specific case illustrated there are two upper suckers 7 and two lower suckers 77, spaced a distance apart exceeding the width of the conveyor 1. Said pairs of suckers are aligned vertically and are connected to a convenient pneumatic circuit. It is apparent that the number of upper or lower suckers can be different from that shown, particularly if the cases are not provided with the central rib 21.

When an open case 2 halts in front of the device 6, its rib 21 lies between said pairs of suckers 7 and 77, which then approach each other under the control of respective cylinder-piston units 8 and 88, which are fixed to the conveyor frame 9. At the end of their approach travel the suckers 7 and 77 are firstly subjected to suction and then withdrawn from each other as shown in Figures 2B and 4.

By this means the upper suckers 7 raise the cast 2 via the rib 21, and the lower suckers 77 keep the sheet 23 separated from the case. In this manner the two half-cases 20 are opened through an angle exceeding 180°, and the sheet is bent in the opposite direction to the case.

This is well illustrated in Figure 4, said configuration being ensured by the intrinsic elasticity of the creasing lines provided between the rib 21 and the half-cases 20. When in said position, the opposing outer edges of the half-cases are practically at the level of a lateral horizontal loading table (see Figures 2B, 4). As can be seen in Figures 2A and 3A, this latter comprises two flanking coplanar plates 10 set on respective opposing slides 11 arranged to slide along a pair of cylindrical bars 110 with mutual approach and withdrawal motion parallel to the conveyor 1. This is achieved by an underlying cylinder-piston unit 12 (Figure 3A) which is hinged to the slides 11 and with which a lever system is associated to synchronize the movements. The lever system comprises a central rocker lever 13 which is pivoted to an underlying slider 15 (Figures 2A, 3A, 4), and to which there are hinged two opposing connecting rods 14 connected to the slides 11. The slider 15 supports the bars 110 on which the slides 11 slide, said slider being slidable along respective horizontal bars 150 positioned perpendicular to the direction of advancement of the cases 2.

The bars 150 are supported on the structure 99 of the insertion device 6, to which structure 99 there is hinged the cylinder-piston unit 151 which drives the slider 15 (see Figures 2A, 3A), to the rear end of this latter there being fixed the cylinder-piston unit 16 for driving a pusher 160.

This latter consists of a plate positioned transversely to the plates 10 and lowerly comprises two projections 161 inserted through corresponding rear longitudinal apertures 100 (Figures 2A, 3A, 4) provided in the underlying plates 10.

The apertures 100 lie above corresponding recesses 111 provided in the underlying slides 11, the width of said apertures 100 and recesses 111 being such as to allow the slides 11 to approach and withdraw from each other, as stated.

The plates 10 extend projectingly beyond the slider 15 and towards the conveyor 1 by a length substantially equal to the width of the descriptive inserts 3. Finally, said projecting parts of the plates have their outer longitudinal edges 101 bent inwards by substantially 180° as shown in Figures 2B, 3B, 4, to form two retention and slide seats for the corresponding edges of the descriptive inserts, as will be apparent hereinafter.

Before an open case 2 stops in front of the device 6, a descriptive insert 3 is loaded onto the rear part of the plates 10, which are open and in their retracted position as shown in Figure 3A.

The pusher 161 then advances and pushes the descriptive inserts between the two bent retention sheets 101, after which the two slides 11 approach each other such that the descriptive insert is obliged to rise in its centre, seeing that its side edges are engaged in the seats 101. As soon as an open case arrives in front of the plates 10, the cylinder-piston unit 151 receives the signal to advance the slider 15, with simultaneous insertion of the plates 10 between the sheet 23 and the half-cases 20 (position shown by dashed and dotted lines in Figure 4).

The plates 10 then retract (position shown by full lines in Figure 4), and the gripper device 66 (see Figure 2B), substantially in the form of a clamp, firstly advances so that its jaws embrace the front ends of the descriptive insert 3 and sheet 23, and then clamps these ends. It should be noted that the unit 66 can be formed to retain only the descriptive insert 3 during the retraction of the plates 10, as the case 2 is retained by the suckers 7 and 77. After said clamping, the plates 10 retract into the position for loading a further descriptive insert 3 (Figure 3A). The device 66 then opens and returns to its rest position (Figure 2B). The suckers 7 and 77 then approach each other to substantially the level of the conveyor, where the vacuum is broken. The suckers then again withdraw from each other and the conveyor advances through one step, and a new cycle restarts.

The invention is not limited to that illustrated and described heretofore, but comprises those modifications and improvements falling within the following claims.

For example, during the retraction of the plates 10 the descriptive insert 3 can be retained by a slidable vertical rod positioned to the side of the upper suckers 7 on the same side as the device 6, to be lowered for insertion into the gap between the facing edges of the plates 10 (see Figure 3B).

## Claims

1. A device for associating descriptive inserts with videocassette cases comprising two half-cases hinged together in the manner of a book and provided externally with a transparent sheet which is fixed to the opposing outer edges of said half-cases, characterised by comprising:
- an intermittently moving horizontal conveyor (1) on which the cases (2) are placed open such that the their interior faces upwards, the hinge (21) between the half-cases (20) being perpendicular to the conveying direction,
- located transversely to the conveyor, a unit (7, 77) for gripping and positioning the cases, and arranged to raise said cases while keeping the sheet (23) distanced from the structure of the case, which is open through an angle exceeding 180°, and
- a horizontal table for inserting the descriptive inserts (3), which is aligned with the aperture defined between the sheet and the structure of the case supported by said unit (7, 77), and comprises two identical coplanar plates (10) driven with mutual approach and withdrawal movement, to occupy a spaced-apart position in which they are able to support a completely extended descriptive insert, and a position of approach in which they cause the descriptive insert to assume a curved configuration,
- said horizontal table being rigid with a slider arranged transversely to the conveyor axis, in order to occupy a retracted position for loading the extended descriptive insert, and an advanced position in which it places the curved descriptive insert between the sheet and structure of the case, means for gripping the descriptive insert for the purpose of retaining it during the retraction of said horizontal table being provided in front of said table on the other side of the conveyor.

2. A device as claimed in claim 1, characterised in that said gripping unit (7, 77) comprises two opposing sets of suckers positioned respectively above and below the outward portion of the conveyor and associated with respective vertical sliders, the suckers (77) of the lower set being positioned on one side and the other of the said outward portion of the conveyor, which has a width less than the corresponding dimension of the case to enable said lower suckers to engage the ends of the central transverse portion of the transparent sheet associated with the case.

3. A device as claimed in claim 1, characterised in that said withdrawal/approach and advancement/retraction movements of said two plates (10) are controlled by a pair of slides (11) on which said two plates are fixed, and an underlying common slider (15) supporting said slides, these latter being linked together by a lever system (13, 14) for synchronizing the movements, said two plates extending beyond the front end of the slider by an amount at least equal to the corresponding dimension of the descriptive insert, said plates having their outer longitudinal edges (101) bent inwards by an angle exceeding 90° to form corresponding stops against which the facing edges of the descriptive insert abut during the mutual approach of the two plates.

4. A device as claimed in claims 1 and 3, characterised in that to the rear of said slider (15) there is provided a transverse pusher (160) for correctly positioning the descriptive inserts (3) along the front projecting edges of said two plates (10).

FIG.1

FIG.4

FIG.2A

FIG.2B

FIG. 3A

FIG.3B

EP 0 405 629 A2